# EUROPÄISCHE PATENTSCHRIFT

(11) **EP 0 308 927 B1**
(45) Veröffentlichungstag und Bekanntmachung des Hinweises auf die Patenterteilung: **01.06.1994**
(21) Anmeldenummer: 88115582.4
(22) Anmeldetag: 22.09.1988
(51) Int. Cl.: C04B 18/26, B62D 29/00, B60R 13/02

(54) **Formteile, insbesondere für Kraftfahrzeuge**
Formed parts, in particular for motor vehicles
Pièces formées, en particulier pour véhicules

(30) Priorität: 22.09.1987 DE 3731859
(43) Veröffentlichungstag der Anmeldung: 29.03.1989
(73) Patentinhaber: FRAUNHOFER-GESELLSCHAFT ZUR FÖRDERUNG DER ANGEWANDTEN FORSCHUNG E.V., 80636 München (DE)
(72) Erfinder: Kossatz, Gert, Prof. Dr.-Ing., D-3300 Braunschweig (DE); Lempfer, Karsten, Dr.-Ing., D-3300 Braunschweig (DE); Sattler, Heinz, Dr.-Ing., D-3300 Braunschweig (DE)

(56) Entgegenhaltungen:
- EP-A- 0 188 680
- AT-B- 128 027
- AT-B- 360 901
- DE-C- 100 978

## Beschreibung

Die vorliegende Erfindung betrifft Formteile gemäß Oberbegriff des Hauptanspruches.

Unter Formteilen werden hierbei konstruktive Formteile, wie Innenverkleidungen von Fahrzeugen, Flugzeugen, Booten oder Schiffen, insbesondere von Kraftfahrzeugen, aber auch andere Formteile, die besonderen Bedingungen ausgesetzt sind, verstanden. Es kann sich bei den Kraftfahrzeug-Formteilen um Autohimmel, Hutablagen, Seiten-Innenverkleidungen, Türverkleidungen, Armaturenbretter oder ähnliches handeln. Ausdrücklich ausgenommen sind plattenförmige Formteile, wie sie schon aus dem Stand der Technik bekannt sind, z.B. der EP-B 19207. Mit diesem Verfahren werden keine formgepreßten Formteile im Sinne dieser Anmeldung, sondern Gipsplatten, d.h. plattenförmige Formteile hergestellt.

Es ist bekannt, diese Formteile mit organischen Füll- oder Bewehrungsstoffen wie Holzspänen, Holzfasern, Papierschnitzeln oder Papierfasern herzustellen. Diese Füll- oder Bewehrungsstoffe werden mit einem Bindemittel zusammengebracht und in Formpressen zu den Formteilen verarbeitet. So werden beispielsweise Innenverkleidungsteile für Kraftfahrzeuge aus zellstoffhaltigem Material gemäß DE-C-28 45 117, DE-C-28 45 112 oder DE-A-26 35 957 mit einem thermoplastischem Kunststoff-Binder verarbeitet. Auch die Verwendung von duroplastischen Bindemitteln wie Isocyanaten ist bekannt. Gemäß DE-C-29 25 630 ist es bekannt, als Faserausgangsmaterial mit Phenolharzen getränkte Abfälle von Industriefiltern zu verwenden.

Unabhängig von den aufwendigen und übermäßig energieverbrauchenden Herstellverfahren dieser vorstehend beschriebenen Formteilefertigungen haften diesen Formteilen alle diejenigen bekannten Nachteile an, wonach die fertigen Formteile ständig gasförmige Schadstoffe (zum Beispiel Formaldehyd) abgeben, was sich dann besonders ungünstig auswirkt, wenn die Formteile beispielsweise in Fahrzeugen so eingesetzt werden, daß die Schadstoffabgabe einseitig in Richtung auf einen kleinen begrenzten Raum (Fahrgastzelle) abgegeben werden, während auf der anderen Seite ein gut wärmeleitender und gasdichter Abschluß (Metallhaut) an dem Formteil anliegt oder diesem dicht benachbart ist. Die erste zu erfüllende Forderung ist deshalb diejenige nach einem weitgehend oder möglichst vollständig emissionsfreien Formkörper.

Der vielleicht naheliegende Ausweg, einen hohen Anteil der organischen Faserstoffe von 60% bis 90% zu wählen und den Anteil der Kunststoffbindemittel damit gering zu halten, führt zu anderen Nachteilen. Der hohe Anteil organischer Füllstoffe führt zu einer Feuchteempfindlichkeit und damit zu erheblichen Formveränderungen sowie zu einer höheren Brandlast. Insbesondere sind relativ hohe Dickenquellungen und Längenänderungen die Folge. Beide Dimensionsänderungen können beispielsweise im Fahrzeugbau nicht hingenommen werden. Dabei sind Formteile mit geringen Bindemittelanteilen im Fahrzeugbau in hohem Maße der Gefahr ausgesetzt, daß Längenänderungen und Dickenquellungen auftreten können, denn Fahrzeuge heizen sich bei Sonneneinstrahlung besonders intensiv auf und sind besonders in Bewegung Regen- und Spritzwasser ausgesetzt. Der Wechsel von Aufheizung durch Sonneneinstrahlung und Abkühlung führen insbesondere im Zusammenwirken mit Wasserattacken zu Kondensationserscheinungen. Diese wirken sich beispielsweise im Türbereich infolge eines Diffusionsstromes vom Wageninneren nach außen besonders nachteilig aus, wobei die oben bereits erwähnte Metallaußenhaut des Fahrzeuges als Dampfsperre und damit als Kondensationsfläche wirkt.

Bei einem Mikroklima in einem Fahrzeug oder in einer Fahrzeugzelle gegenüber einem Außenklima entsteht eine hohe Klimadifferenz, welche unmittelbar auf das Formteil einwirkt. Unterschiedliche Feuchtigkeiten und Temperaturen führen zu einem Feuchtegradienten über den Querschnitt des Formteiles, welcher Spannungen im Formteil hervorruft. Diese Spannungen führen zu Verformungen in Länge, Breite und Dicke des Formteiles. Die Folge sind Längen- oder Breitenänderungen, Ausbeulungen und Passungsschwierigkeiten an den Montagestellen oder an den Durchführungen für Kurbeltriebe oder ähnliches. Die Formteile müssen aber für Wartungs- oder Reparaturarbeiten ohne Passungsschwierigkeiten leicht aus- und einbaubar sein.

Aufgabe der Erfindung ist es, ein gattungsgemäßes Formteil so auszugestalten, daß bei herstellungstechnisch einfacher Bauform das Formteil auch unter ungünstigen klimatischen Bedingungen Dimensionsstabilität, Feuchteunempfindlichkeit, Emissionsfreiheit und Nichtbrennbarkeit aufweist.

Gelöst ist diese Aufgabe durch die im Kennzeichen des Hauptanspruches angegebene Erfindung. Die Unteransprüche stellen vorteilhafte Weiterbildungen dar.

Insbesondere eignet sich das aus der EP-B-19 207 für die Herstellung von Bauplatten bekannte Halbtrockenverfahren, wonach die organischen Füll- oder Bewehrungsstoffe in der Mischung zugleich Zuträger für die Mindestmenge an dem notwendigen Abbindewasser sind. Selbstverständlich sind Mischungen aus Faserstoffen und Gips zum Herstellen von Bauplatten nicht nur aus der EP-B-19 207, sondern beispielsweise auch aus der DE-C-100978 oder DE-C-927 735 oder DE-A-15 571 466 oder DE-AS 24 49 015 bekannt. Diese leiten sich aber alle aus der klassischen Verwendung des Gipses als Baumaterial ab.

In den erfindungsgemäßen Lösungsgedanken ist die Verwendung von Gips-Zement-Puzzolan- oder Gips-Kunstharz-Bindemitteln eingeschlossen. So geht ein Bindemittelgemisch aus sulfatischen, kalkspendenden und aluminatreichen, puzzolanischen Stoffen aus DE-A-32 30 406.4 hervor. Die Verwendung von Gipskunstharzgemischen ist an sich aus der DE-C-1 048 531 oder der DE-C-1 129 879 bekannt. Schließlich lassen sich auch die in der früheren eigenen Anmeldung DE-A-36 26 048 beschriebenen Lösungen für die vorliegende Erfindung einsetzen.

Die Formteile gemäß der Erfindung geben unter normalen Einsatzbedingungen im Gegensatz zu den bisher verwendeten Formteilen in stark verringertem Maße gasförmige Emissionen ab. Selbst bei alternativer zusätzlicher Verwendung von Kunststoffbindern findet wegen des geringen Anteils nur eine minimale Schadgasabgabe statt.

Die Dickenänderung ist geringer als bei kunstharzgebundenen Platten, da die Späne oder Fasern in der Bindemittelmatrix nicht unmittelbar miteinander verklebt sind. Vielmehr ist der Span- oder Faseranteil im Vergleich zum Mengenanteil des Gipses gering. Die Späne oder Fasern sind im Endprodukt "Formteil" wesentlich weiter voneinander entfernt verteilt. Deshalb wirken sich die feuchtebedingten Dimensionsänderungen der Späne oder Fasern nur wenig auf die des Verbundes aus, der eine hohe Formtreue erhält. Die bei Formteilen sonst in der Oberfläche unangenehm auftretenden Folgen von Dickenänderungen bleiben aus.

Das Formteil ist praktisch unbrennbar. Dies ist gemäß der Erfindung darauf zurückzuführen, daß in allen Fällen Gips im Bindemittelanteil mit einem hohen Anteil vertreten ist. Der hohe Gipsanteil bewirkt ein gutes brandschutztechnisches Verhalten. Deshalb ist die Zugabe von Flammschutzmitteln nicht notwendig.

Die Mischung zum Herstellen der Formteile weist erfindungsgemäß eine rieselfähige Konsistenz auf. Diese erlaubt das Ausnutzen mehrerer Freiheitsgrade bei der Formgebung. Dadurch können beliebig geformte Teile (Formteile) hergestellt werden. Dies geschieht durch Verdichten und ein anschließendes Pressen in einer Form.

Weitere Einzelheiten, Merkmale und Vorteile der Erfindung ergeben sich aus den Ansprüchen und den folgenden Ausführungsbeispielen:
Die wesentlichen Bestandteile, nämlich das Füll- und Bewehrungsmaterial und das mineralische Bindemittel werden im sogenannten Halbtrockenverfahren gemischt. Hierfür werden beispielsweise Holzspäne durch Zumischen von Wasser unter Berücksichtigung der Holzfeuchte auf einen vorbestimmten Wassergehalt gebracht. In das Wasser kann ein wasseremulgierbares Isocyanat oder Epoxydharz als Kunststoffanteil zugegeben werden. Diese beiden Kunstharze haben gegenüber anderen Kunstharzen die Vorteile, daß sie wasseremulgierbar sind und kalthärtend eingestellt werden können. Außerdem sind sie emissionsarm. Die so aufbereiteten Holzspäne werden in einer Mischtrommel mit Gipsbindemittel gemischt, wobei das Gipsbindemittel trocken in die feucht vorgegebenen Späne eingemengt wird. Der in den Spänen vorhandene Wasservorrat reicht aus, um dem Gipsbindemittel das erforderliche Abbindewasser zur Verfügung zu stellen. Das aus der Mischtrommel entnommene Gemenge wird in eine Matrize eingebracht und eine Patrize wird aufgelegt und das Ganze wird unter mäßigem Druck auf die gewünschte Dicke und Dichte verpreßt.

Vor dem Verpressen kann dem Gemenge ein beliebiges Zusatzmittel zugegeben werden. So können beispielsweise Stellmittel wie Verzögerer oder Beschleuniger für das Bindemittel zugesetzt werden, ebenso können Farbstoffe beigegeben werden, wenn dies erwünscht ist.

Das vorstehende Verfahren kann in Grenzen gemäß den folgenden Beispielen variiert werden. In den folgenden Beispielen sind die Angaben der Zusammensetzung des Gemenges auf ein Masseteil des Gipsbindemittels = l bezogen.

### Beispiel 1

Auf ein Masseteil Gipsbindemittel kommen 0,22 Teile Späne, die mit 0,3 Teilen Wasser versehen sind. Auf einen Kunstharzzusatz wird in diesem Beispiel vollständig verzichtet. Das Material wird auf eine Dicke von 6mm verpreßt. Die gemessene Dichte beträgt 1230 kg/m³. Die Biegefestigkeit ist mit 7,1 N/mm² festgestellt worden. Der gemessene Elastizitätsmodul beträgt 3820 N/mm². Die Dickenquellung nach 24 Stunden Wasserlagerung ist kleiner als 2%.

Zu der Angabe der Dickenquellung ist allgemein auch für die folgenden Beispiele anzumerken, daß bei kunstharzgebundenen Spanplatten eine Dickenquellung zwischen 10 bis 15% als zulässig erachtet wird. Dieser Wert wird im Beispiel 1 und in den folgenden Beispielen erheblich unterschritten.

### Beispiel 2

Einem Masseteil Gipsbindemittel werden 0,33 Masseteile Späne zugemengt, die mit 0,3 Masseteilen Wasser versehen sind. Auch in diesem Beispiel wird auf eine Zugabe von Kunstharzbindemitteln verzichtet. Es wird ein Formteil mit einer Dicke von 8mm hergestellt. Die Dichte beträgt 1270 kg/m³. Die Biegefestigkeit liegt bei 10,6 N/mm² und der Elastizitätsmodul bei 4550 N/mm². Die Dickenquellung nach 24 Stunden Wasserlagerung ist kleiner als 2%.

### Beispiel 3

Auf wiederum ein Masseteil Gips kommen 0,22 Masseteile Späne, die mit 0,3 Masseteilen Wasser versehen sind. In diesem Beispiel wird ein Zusatz von 0,075 Masseteilen Isocyanat beigegeben. Das Formteil hat eine Dicke von 6 mm. Die Dichte beträgt 1290 kg/m³. Die Biegefestigkeit liegt bei 10,8 N/mm² und der Elastizitätsmodul beträgt 5000 N/mm². Die Dickenquellung nach 24 Stunden Wasserlagerung ist kleiner als 1%.

### Beispiel 4

Derselben Mischung wie in Beispiel 3 wird Isocyanat in einer Menge von 0,15 Masseteilen zugegeben. Das Formteil erhält eine Dicke von 6,5 mm. Die Dichte beträgt 1550 kg/m². Die Biegefestigkeit liegt bei 16,6 N/mm² und der Elastizitätsmodul bei 7710 N/mm². Die Dickenquellung nach 24 Stunden Wasserlagerung ist kleiner als 1%.

### Beispiel 5

Das Beispiel 2 wird dahingehend modifiziert, daß Isocyanat in einer Menge von 0,075 Masseteilen zugegeben wird. Das verpreßte Formteil hat eine Dicke von 7mm. Die Dichte beträgt 1260 kg/m³. Die Biegefestigkeit liegt bei 15,1 N/mm² und der Elastizitätsmodul hat einen Wert von 4700 N/mm². Die Dickenquellung nach 24 Stunden Wasserlagerung ist kleiner als 1%.

### Beispiel 6

Das Beispiel 5 wird dahingehend modifiziert, daß der Isocyanatanteil auf 0,15 Masseteile eingestellt ist. Das Formteil wird zu einer Dicke von 6mm gepreßt. Die Dichte beträgt 1310 kg/m³. Die Biegefestigkeit wird mit 19,2 N/mm² gemessen und der Elastizitätsmodul liegt bei 6280 N/mm². Die Dickenquellung nach 24 Stunden Wasserlagerung ist kleiner als 1%.

### Beispiel 7

Die Mischung des Beispiels 4 wird bis auf eine Dicke von 6 mm verpreßt. Hierbei ergibt sich eine Dichte von 1540 kg/m³. Die Biegefestigkeit liegt bei 16,0 N/mm² und der Elastizitätsmodul bei 7410 N/mm². Die Dickenquellung nach 24 Stunden Wasserlagerung ist kleiner als 1%.

### Beispiel 8

Die Mengenzusammensetzung von Gipsbindemittel, Spänen und Wasser ist dieselbe wie im Beispiel 2. Es wird jedoch ein Epoxidharz mit einer Dosierung von 0,15 Masseteilen zugesetzt und das Formteil auf eine Stärke von 6 mm gepreßt. Die gemessene Dichte beträgt 1260 kg/m³ und die Biegefestigkeit liegt bei 12,9 N/mm². Der Elastizitätsmodul wird mit 4080 N/mm² gemessen. Die Dickenquellung nach 24 Stunden Wasserlagerung ist kleiner als 1%.

## Patentansprüche

1. Formgepreßtes Formteil zum Einsatz in Fahrzeugen wie zum Beispiel für Innenverkleidungen, Armaturenbretter, Hutablagen oder zum Einsatz an feuchtigkeitsgefährdeten Stellen, außer plattenförmige Formteile, insbesonders Gipsplatten, Bauplatten oder Tischplatten, dadurch gekennzeichnet, daß das formgepreßte Formteil aus einem Gemisch von Holzspänen, Holzfasern, Papierschnitzeln und/oder Papierfasern mit einem Gipsbindemittel oder einem Gips-Zement-Puzzolan-Bindemittel und Wasser oder aus einem dieser beiden Bindemittel unter Zusatz von Kunstharzen durch Abbinden der Bindemittelkomponenten entsteht, wobei das zum Abbinden des mineralischen Bindemittels erforderliche Wasser ausschließlich oder überwiegend über die Holzspäne, Holzfasern, Papierschnitzel und/oder Papierfasern zugeführt wird und dadurch eine solche Stoffgemisch-Konsistenz erreicht wird, daß die Formgebung durch Streuen und Verdichten des Stoffgemisches erfolgt, wobei auf 1 Masseteil des mineralischen Bindemittels 0,22 bis 0,33 Masseteile, Holzspäne, Holzfasern, Papierschnitzel oder Papierfasern oder einem Gemisch daraus, 0,30 Masseteile Wasser und 0,075 bis 0,15 Masseteile Kunstharz kommen.

2. Formteil nach Anspruch 1, dadurch gekennzeichnet, daß die Kunstharzkomponente aus Isocyanat besteht und in Masseteilen von 0,075 bis 0,15 zugesetzt wird.

3. Formteil nach Anspruch 1, dadurch gekennzeichnet, daß die Kunstharzkomponente aus Epoxidharz besteht und in Masseteilen von 0,15 zugesetzt wird.

4. Verfahren zum Herstellen eines Formteiles nach einem oder mehreren der Ansprüche 1 bis 3, dadurch gekennzeichnet, daß dem mineralischen Bindemittel zur gleichmäßigen Verteilung das zum Abbinden notwendige Wasser durch inniges Mischen mit definiert angefeuchteten Holzspänen, Holzfasern, Papierschnitzeln oder Papierfasern oder Gemischen daraus zugeführt wird, wobei gegebenenfalls die erforderliche Kunstharzmenge als Kunstharz-Wasser-Emulsion in diesem Wasser enthalten ist und daß dieses Stoffgemisch nach entsprechender Formgebung in der Preßform zu einem Formteil erhärtet.

## Claims

1. A compression-moulded moulding for use in vehicles, for example for internal linings, dashboards, hat shelves, or for use at places at risk from moisture, but excluding mouldings in panel form, more particularly plaster panels, building panels or table tops, characterised in that the compression-moulded moulding is formed from a mixture of wood chips, wood fibres, paper shreds and/or paper fibres with a plaster binder or a plaster-cement-pozzuolana-binder and water or one of these two binders with the addition of synthetic resins, by setting of the binder components, the water required for setting of the mineral binder being supplied exclusively or predominantly by way of the wood chips, wood fibres, paper shreds and/or paper fibres, thus giving a mix consistency such that shaping is effected by spreading and compression of the mix, 0.22 to 0.33 parts by mass of wood chips, wood fibres, paper shreds or paper fibres or a mixture thereof, 0.30 parts by mass of water and 0.075 to 0.15 parts by mass of synthetic resin being used per 1 part by mass of mineral binder.

2. A moulding according to claim 1, characterised in that the synthetic resin component consists of isocyanate and is added in parts by mass of 0.075 to 0.15.

3. A moulding according to claim 1, characterised in that the synthetic resin component consists of epoxy resin and is added in parts by mass of 0.15.

4. A process for the production of a moulding according to one or more of claims 1 to 3, characterised in that the water required for setting is supplied to the mineral binder for uniform distribution by intimate mixing with wood chips, wood fibres, paper shreds or paper fibres or mixtures thereof wetted to a defined degree, the required quantity of synthetic resin being contained in this water where applicable as a synthetic resin and water emulsion, and in that this mix after appropriate shaping in the press mould sets to form a moulding.

## Revendications

1. Pièces de forme obtenues par compression, pour utilisation dans des véhicules, par exemple comme garnissages de porte, tableaux de bord, des balises de route pour utilisation dans des zones à risque d'humidité, à l'exclusion de pièces plates, telles que plaque de plâtre, panneaux de construction ou plateaux de tables, présentant les caractéristiques suivantes :
- la pièce de forme est obtenue à partir d'un mélange de copeaux de bois, de fibres de bois, de rognures de papier et/ou de fibres de papier avec un liant au plâtre ou un liant à base de pouzzolane, ciment et plâtre et de l'eau, ou avec un de ces deux liants additionné de résines synthétiques, par liaison des composants des liants,
- l'eau nécessaire à la liaison des liants minéraux ci-dessus est apportée exclusivement ou principalement par les copeaux ou les fibres de bois, les rognures et/ou les fibres de papier, de manière à atteindre une consistance du mélange telle que la forme puisse être obtenue par dispersion et compactage du mélange.
- à une partie (en masse) du liant minéral, on ajoute 0,22 à 0,33 partie de copeaux ou fibres de bois, de rognures ou de fibres de papier, ou d'un mélange de ces éléments, 0,33 partie d'eau et 0,075 à 0,15 partie de résine synthétique.

2. Pièce de forme selon la revendication 1, caractérisée en ce que la résine synthétique est de l'isocyanate, additionnée à raison de 0,075 à 0,15 partie.

3. Pièce de forme selon la revendication 1, caractérisée en ce que la résine synthétique est une résine époxy, additionnée à raison de 0,15 partie.

4. Procédé de fabrication d'une pièce de forme selon l'une ou plusieurs des revendications 1 à 3, caractérisé en ce que pour obtenir une répartition uniforme du liant minéral, on lui fait apport de l'eau qui lui est nécessaire pour jouer son rôle, en le mélangeant intimement avec des copeaux ou des fibres de bois, des rognures ou des fibres de papier ou des mélanges de ces éléments présentant la quantité nécessaire de résine étant le cas échéant contenue à l'état d'émulsion aqueuse dans cette eau, le mélange ainsi obtenu prenant la forme voulue dans un moule à compression où il devient la pièce de forme par durcissement.
